# EUROPEAN PATENT SPECIFICATION

(11) **EP 3 580 057 B1**
(45) Date of publication and mention of the grant of the patent: **10.01.2024**
(21) Application number: 18751039.1
(22) Date of filing: 12.02.2018
(51) Int. Cl.: B32B 21/06, B32B 29/00, B32B 5/26, B44C 5/04, C08L 61/06, B29C 33/60, B29C 33/68, B32B 29/06, B31D 1/00, B32B 37/18, D21H 27/26, D21H 19/12

(54) **METHOD OF MAKING A DECORATIVE LAMINATE WITH CORE LAYER SUBJECTED TO SODIUM ALGINATE TREATMENT**
VERFAHREN ZUR HERSTELLUNG EINES DEKORATIVEN LAMINATS MIT EINER KERNSCHICHT, DIE EINER NATRIUMALGINATBEHANDLUNG UNTERZOGEN WURDE
PROCÉDÉ DE FABRICATION D'UN STRATIFIÉ DÉCORATIF AYANT UNE COUCHE CENTRALE SOUMISE À UN TRAITEMENT D'ALGINATE DE SODIUM

(30) Priority: 13.02.2017 US 201762458148 P
(43) Date of publication of application: 18.12.2019
(73) Proprietor: Wilsonart LLC, Austin, TX 78738 (US)
(72) Inventor: WILLIAMS, Joel, L., Temple TX 76501 (US)
(74) Representative: Glück Kritzenberger Patentanwälte PartGmbB
(86) International application number: PCT/US2018/017746
(87) International publication number: WO 2018/148623

(56) References cited:
- GB-A- 1 509 260
- US-A- 4 398 985
- US-A- 4 510 199
- US-A1- 2003 232 134
- US-A1- 2015 266 274
- US-B1- 6 723 200

## Description

### FIELD OF THE INVENTION

The invention relates to a method for making a decorative laminate.

### BACKGROUND

Decorative laminates are generally constructed from a plurality of synthetic resin impregnated paper sheets bonded under heat and pressure to form a unitary structure. With regard to the manufacture of high pressure laminates, the decorative laminate sheet assembly includes at least a core of one or more phenol formaldehyde resin impregnated sheets and a melamine impregnated decorative sheet. The decorative sheet may be further covered with a transparent melamine impregnated overlay layer.

The decorative sheet provides the laminate with an attractive appearance. The decorative sheet and the overlay layer dictate the surface characteristics of the decorative laminate. For example, the composition of the decorative sheet and overlay layer dictates the decorative laminate's resistance to chemical agents, heat, light, impact and abrasion.

Decorative sheets are commonly manufactured from high quality 60-205 grams/meter², pigment filled, alpha cellulose paper impregnated with a water alcohol or water solution of melamine-formaldehyde resin. The resin impregnated decorative sheets are subsequently dried, partially cured, and finally cut into sheets. The pigment filled, alpha cellulose paper of the decorative sheet, may include a solid color, a decorative design, or a roto-gravure reproduction of natural materials, such as, wood, marble, leather, abstract design, etc. The aesthetic characteristics of the cellulose paper are revealed as the laminate's decorative design upon completion of the manufacture of the decorative laminate.

The core, or base, functions to impart rigidity and impact resistance to the laminate. Prior to stacking, the paper sheets of the core are impregnated with a water alcohol or water solution of phenol formaldehyde resin, dried and partially cured in a hot oven. The cured laminate is then cut into predetermined shapes used to assemble the laminate layer. The core may, for example, include a plurality of sheets of 160 to 550 grams/meter² basis weight Kraft paper, impregnated with phenol formaldehyde resin, wherein the phenol formaldehyde resin is generally 25% to 35% of the final weight of the impregnated or coated core sheet. The Kraft paper is impregnated throughout and bonded with a substantially cured phenol formaldehyde resin which has been converted to a thermoset state during the initial laminating step.

Multiple laminate lay-ups are commonly pressed at the same time. When the laminate lay-ups are stacked, care must be taken to ensure that the laminate sheet assemblies do not stick together after the application of heat and pressure. Where the bottom sides of the laminate lay-ups are positioned in a facing relationship during the application of heat and pressure, a release agent is commonly applied to the bottom sheets of the laminate lay-ups such that the bottom sheets do not stick together and may be readily separated after the application of heat and pressure. Thereafter, the bottom layer of the resulting decorative laminate must be sanded to remove the release agent before the decorative laminate may be adhesively bonded to a substrate. Consequently, the use of these release agents adds expense and processing time to the manufacture of decorative laminates.

As a result, the Kraft paper on the backside of high pressure decorative laminates, which must be capable of release from adjacent laminate lay-ups, contains a Kraft paper that has been coated with a sodium alginate release material on at least the exposed side of the sheet. The sodium alginate is applied by machines which are capable of applying release coatings and drying coatings to specified moisture contents. The sodium alginate is applied to rolls of pre-made/pre-wound material after the paper is made.

A solid substrate may be bonded to the laminate where additional rigidity is required. Substrates are generally composed of a pre-cured plastic laminate, such as glass fiber-reinforced thermoset polyester resin laminates and the like; a wood product, such as hardboard, wood waste or particle boards, plywood and the like; a mineral base board, such as, cement-asbestos board, sheet rock, plaster board, and the like; or a combination of substrates. The substrate is commonly applied to the phenol formaldehyde resin impregnated sheets making up the core only after the laminate lay-up is pressed and heated to form the final decorative laminate.

Decorative laminates are generally manufactured by stacking the resin impregnated core sheets, the decorative sheet and the overlay layer to form a laminate sheet assembly, or laminate lay-up. The laminate lay-up is placed between steel press plates and subjected to temperatures in the range of about 121° Celsius to 160° Celsius, preferably 131° Celsius, and pressure of about 56.24 kilograms/centimeter² to 112.48 kilograms/centimeter², preferably 85 kilograms/centimeter², for a time sufficient to consolidate the laminate and cure the resins (generally about 25 minutes to an hour). The pressure and heat force the resin in the paper sheets to flow, cure and consolidate the sheets into a unitary laminated mass referred to in the art as a high pressure decorative laminate. Finally, the formed decorative laminate is bonded to a reinforcing substrate, such as, plywood, hardboard, asbestos board, particle board or the like.

GB 1 509 260 A discloses a decorative laminate comprising a plurality of resin-impregnated sheets of fibrous material bonded together at elevated temperature and pressure, at least one outer surface of a surface sheet thereof having applied thereto, before bonding the sheets, a coating comprising an aqueous solution or dispersion of sodium alginate, which coating acts as a release agent.

US 2003/232134 A1 discloses a lower most core sheet coated with sodium alginate on the side facing away from the decorative layer and impregnated on the opposite side with a phenolic resin to provide adhesion with the further upper core sheet layers.

### SUMARY OF THE INVENTION

It is the object of the present invention to provide a method for making a decorative laminate including a decorative layer composed of a resin impregnated decorative sheet and a core layer including an upper core sheet and a lowermost core sheet. The upper core sheet is resin impregnated, and the lowermost core sheet is treated with sodium alginate and resin impregnated. The decorative laminate may include an overlay paper layer positioned on top of the decorative layer.

The upper core sheet may be Kraft paper resin impregnated with phenol formaldehyde resin.

The lowermost core sheet may be Kraft paper resin impregnated with phenol formaldehyde resin.

The sodium alginate may be part of a sodium alginate mixture composed of water, sodium alginate, a release agent, and a defoamer.

The present invention provides a method for preparing a decorative laminate as defined in claims 1 to 4.

Other objects and advantages of the present invention will become apparent from the following detailed description when viewed in conjunction with the accompanying drawings, which set forth certain embodiments of the invention.

### BRIEF DESCRIPTION OF THE DRAWINGS

Figure 1 is a schematic of the decorative laminate prepared by a method in accordance with the present invention.
Figure 2 is a detailed schematic of the bottom second resin impregnated core sheet of the decorative laminate disclosed in Figure 1.
Figure 3 is a schematic of the stacking and manufacturing process employed in accordance with the present invention.
Figure 4 is a schematic of the paper making machine employed in accordance with the present invention.

### DETAILED DESCRIPTION

The detailed embodiment of the present invention is disclosed herein. It should be understood, however, that the disclosed embodiment is merely exemplary of the invention, which may be embodied in various forms. Therefore, the details disclosed herein are not to be interpreted as limiting, but merely as a basis for teaching one skilled in the art how to make and/or use the invention.

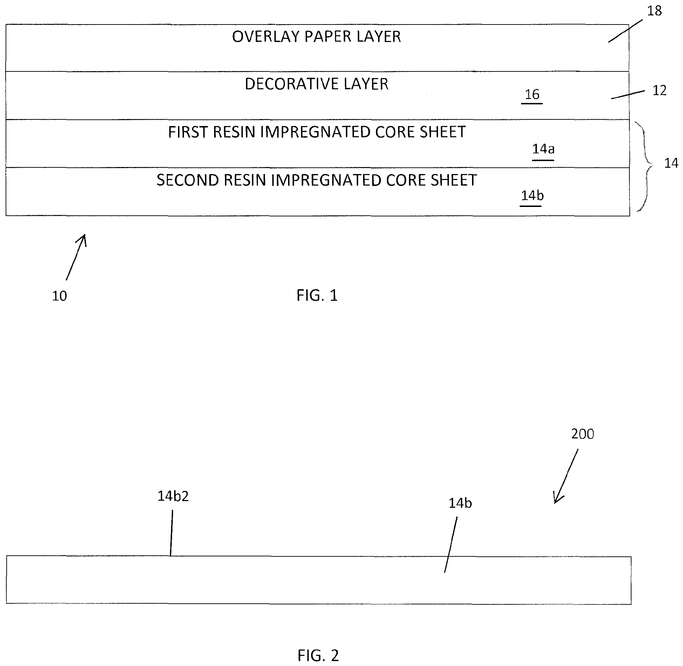

Referring now to the drawings, an embodiment of the high pressure decorative laminate 10 disclosed herein is illustrated in Figure 1. Briefly, and as will be described in greater detail below, the decorative laminate 10 includes a decorative layer 12 and a core layer 14. The high pressure decorative laminate 10 in accordance with a preferred embodiment also includes an overlay paper layer 18. The decorative layer 12 is composed of a resin impregnated decorative sheet 16. The core layer 14 is composed of plural core sheets 14a, 14b of core paper.

As will be explained below in detail, the upper, top (or first) core sheet 14a is impregnated with phenol formaldehyde resin prior to the consolidation of the decorative laminate 10 via the application of the heat and pressure, while the lowermost, bottom (or second) core sheet 14b is treated as described below prior to the consolidation of the decorative laminate 10 via the application of the heat and pressure and is ultimately impregnated with phenol formaldehyde resin when the phenol formaldehyde resin from the first core sheet 14a flows within the laminate lay-up 10' during the application of the heat and pressure

The lowermost resin impregnated core sheet 14b, that is, the exposed sheet at the bottom of the decorative laminate 10 is subjected to a sodium alginate treatment and is, therefore, referred to herein as the "sodium alginate treated paper" or "sodium alginate treated Kraft paper."

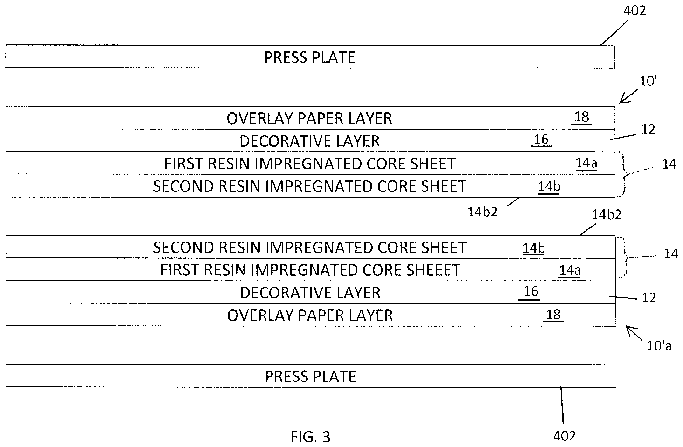

The decorative laminate 10 is manufactured by first preparing the overlay paper layer 18, the resin impregnated decorative sheet 16, the first core sheet 14a, and the second core sheet 14b. As shown with reference to Figure 1, the overlay paper layer 18, the resin impregnated decorative sheet 16, the first core sheet 14a, and the second core sheet 14b are layered to form a laminate lay-up 10' (as shown in Figure 3), and the laminate lay-up 10' is heated and pressed to consolidate and cure the laminate 10. It should be appreciated, however, that the layering pattern may be varied, somewhat, without departing from the spirit of the present disclosure.

The overlay paper layer 18 is preferably a melamine impregnated paper layer. The overlay paper layer 18 is preferably manufactured from a low basis weight transparent sheet impregnated with resin, for example, melamine. The resin impregnated overlay paper layer 18 is subsequently dried, partially cured and finally cut into sheets. While the paper may exhibit opaque properties prior to heating and pressing, the overlay paper layer 18 in the final fabricated laminate is preferably transparent to permit viewing of the decorative sheet positioned directly beneath the overlay paper layer 18.

The decorative layer 12 is composed of a conventional decorative sheet 16 positioned directly beneath the overlay paper layer 18. When the laminate 10 is fully heated and pressed, as will be discussed in detail below, the overlay paper layer 18 becomes translucent, fully exposing the decorative layer 12. The decorative layer 12 is chosen from a wide array of sheets. For example, the decorative layer 12 may be a solid color (for example, white) or may include an aesthetically appealing pattern.

The overlay paper layer 18 and the decorative layer 12 also dictate the surface characteristics of the final decorative laminate 10. For example, the composition of the overlay paper layer 18 and decorative layer 12 dictates the resistance of the decorative laminate 10 to chemical agents, heat, light, shock and abrasion.

As discussed above, the decorative layer 12 is composed of a sheet of decorative paper 16. The decorative sheets are commonly manufactured from high quality 60-205 grams/meter², pigment filled, alpha cellulose paper impregnated with a water alcohol or water solution of melamine-formaldehyde resin. The alpha cellulose paper, in accordance with an embodiment of the present disclosure, is impregnated with a resin content of approximately 50% or greater. The resin impregnated paper is subsequently dried, partially cured, and finally cut into properly sized sheets. The pigment filled, alpha cellulose paper of the decorative sheet may include a solid color, a decorative design, or a roto-gravure reproduction of natural materials, such as, wood, marble, leather, etc. The aesthetic characteristics of the cellulose paper are revealed as the laminate's decorative design upon completion of the decorative laminate.

The core layer 14 is preferably composed of at least the first and second core sheets 14a, 14b of Kraft (or core) paper, although other materials, and volume of sheets, may be used without departing from the spirit of the present disclosure. For example, the core layer 14 includes the first core sheet 14a composed of 160-550 grams/meter² basis weight Kraft paper. The Kraft paper of the upper, top first core sheet 14a is processed in a traditional manner and is, therefore, impregnated with a phenol formaldehyde resin composition and is partially cured (β-staged). In accordance with a preferred embodiment, the upper, top first core sheet 14a is impregnated with phenol formaldehyde resin such that the phenol formaldehyde resin is generally 25% to 35% of the final weight of the impregnated core sheet.

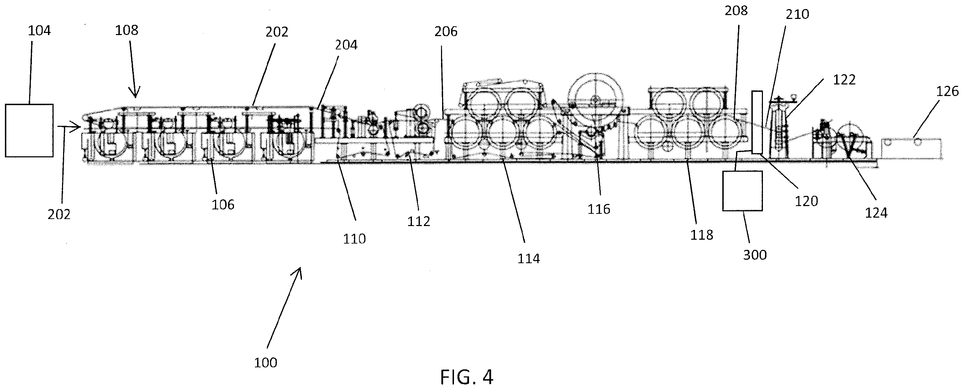

With regard to the lowermost, bottom second core sheet 14b, the Kraft paper is preferably 160 grams/meter² to 550 grams/meter² basis weight Kraft paper. However, the Kraft paper is manufactured in a distinctive manner as discussed with reference to Figure 4. In particular, a coating of sodium alginate is applied to Kraft paper on a paper machine 100 as the Kraft paper is being produced ("sodium alginate treated Kraft paper 200"). In particular, the coating of sodium alginate is applied to the one side of the Kraft paper, which ultimately becomes the second side 14b2 of the second core sheet 14b when the layers of the decorative laminate 10 are ultimately layered for consolidation under heat and pressure. This allows high pressure laminate producers to eliminate coating Kraft paper in their manufacturing process and become more efficient by using this pre-coated material. The resulting sodium alginate treated Kraft paper used as the lowermost, bottom second core sheet 14b.

The sodium alginate treated Kraft paper 200, which ultimately is used as the second core sheet 14b, is manufactured in the manner described below and with reference to Figure 4. An aqueous fluid containing cellulosic pulp and other papermaking ingredients is first formed in a conventional manner. Thereafter, the aqueous fluid (or slurry) 202 is delivered to a pulp thickener 104 where excess water is expressed. From the pulp thickener 104, the slurry 202 is deposited on a conventional former (for example, a Fourdrinier wire cloth) 106 in the mould section 108 of the paper making machine 100. After forming, the formed slurry 204 is pressed in a baby press 110 which is followed by further pressing in a press section 112. The formed and pressed slurry 206 is then heated in order to dry the material and produce a self-sustaining web of paper 208. This is accomplished in the pre-dryer section 114, the M.G. section (that is, a cylinder producing desirable surface characteristics) 116 and the post-dryer section 118 using conventional equipment and techniques. After drying, the web of paper 208 is subjected to the sodium alginate treatment in accordance with the present invention.

In particular, the sodium alginate mixture 300 is prepared prior to the start of the paper making process. For example, in order to create a 500 gallon (1,892.7 liter) mixture, 500 gallons (1,892.7 liters) of water are mixed with 75 pounds (34.0 kilograms) of sodium alginate, 6500 grams (229.28 ounces) of a release agent (preferably Pat-C-2725R release agent manufactured by E. und P. Würtz GmbH & Co. KG Würtz which is a lubricant and release agent for polymers), 2500 grams (88.18 ounces) of defoamer (preferably TROYKYD^{®} D777 silicone modified defoamer manufactured by Troy Corporation), 750 grams (26.28 ounces) of red dye (preferably FC88941 Red Dye manufactured by Fentak PTY LTD). The sodium alginate mixture 300 is then agitated and mixed to the viscosity of 500-700 centipoise. In addition, or in place of, the disclosed Pat-C-2725R release agent manufactured by E. und P. Würtz GmbH & Co. KG Würtz, wax and/or silicone release agents may be used within the spirit of the present invention.

Thereafter, the sodium alginate mixture 300 is utilized in conjunction with a sodium alginate mixture application assembly (in the form of a roll coater or nozzle applicator) 120 for application to the web of paper 208 after the post-dryer section 118 and before the calendar section 122. In accordance with a preferred embodiment, the sodium alginate mixture 300 is only applied to one side of the web of paper 208, which ultimately becomes the second side 14b2 of the second core sheet 14b when the layers of the decorative laminate 10 are ultimately layered for consolidation under heat and pressure. Preferably, 18-24 pounds (8.16-10.89 kilograms) of sodium alginate mixture 300 is applied per ton (21.77 metric tons) of paper 208.

After application to the web of paper 208, the sodium alginate mixture 300 is dried using the heat from the paper exiting the post dryer section 118 (or the web of paper 208 may be dried using well known infrared heaters). It is appreciated that the sodium alginate must be dried to 3-4% volatile content and that the line speed of the paper machine 100, which can run anywhere from 300 feet per minute (91.44 meters per minute) to 1,000 feet per minute (304.8 meters per minute), will be determined based upon the drying system employed in accordance with the present invention. Ultimately, the sodium alginate treated web of paper 210 exiting the sodium alginate mixture application assembly 120 is approximately 150° Celsius to 130° Celsius.

After leaving the sodium alginate mixture application assembly 120, the treated web of paper 210 is subjected to a calendar section (or machine) 122, a pope reel section 124 and a sheet cutter 126 which ultimately process the paper in a conventional manner using well known equipment. In the sheet cutter 126, the treated web of paper 210 is cut into appropriate lengths and widths to form the sodium alginate treated Kraft paper 200 that is ultimately used in accordance with the present invention as the second core sheet 14b. It is important to note that the sodium alginate treated Kraft paper will not be impregnated with resin, but rather (and as is explained below in greater detail) the sodium alginate treated Kraft paper is paper will be collated as is, and ultimately layered with the second core sheet 14a, which is resin impregnated Kraft paper treated with phenolic resin in a conventional manner. The phenolic resin from the first core sheet 14a will fully penetrate the second core sheet 14b, that is, the sodium alginate treated Kraft paper, during the pressing process so as to consolidate the layers of the resulting decorative laminate.

Once the appropriate layers of the laminate are formed, the sheets are stacked in a conventional manner (with the lowermost, bottom second core sheet 14b at the bottom of the laminate lay-up 10' and the second side 14b2 (that is, the side of the second core sheet coated with the sodium alginate mixture) of the bottom second resin impregnated core sheet 14b facing outwardly away from the remainder of the laminate lay-up 10'. As shown in Figure 3, a first laminate lay-up 10' stacked as described above is then stacked with a second laminate lay-up 10'a stacked as described above with the second sides of the bottom second resin impregnated core sheets 14b positioned in a facing relationship. The first and second laminate lay-ups 10', 10'a, are then positioned between steel press plates 402 with the overlay sheets 18 of the respective first laminate lay-up 10' and the second laminate lay-up 10'a in direct contact with the steel press plates 102. The laminate lay-ups 100 are then subjected to temperatures in the range of 121° Celsius to 160° Celsius, preferably 131° Celsius, and pressure of about 56.24 kilograms/centimeter² to 112.48 kilograms/centimeter², preferably 85 kilograms/centimeter², for a time sufficient to consolidate the laminate and cure the resins (generally about 25 minutes to an hour). The laminates are then cooled for approximately minutes under pressure before it is ready for further processing in preparation for its use in the manufacture of various products.

While specific temperatures, pressures and times are described above, it should be appreciated that a variety of pressing techniques may be used without departing from the spirit of the present disclosure.

The pressure and heat force the resin in the paper sheets to flow, cure and consolidate the sheets into a unitary laminated mass referred to in the art as a decorative high pressure laminate. Generally, more than one laminate is formed at one time.

It should be understood that various changes and modifications to the presently preferred embodiments described herein will be apparent to those skilled in the art.

## Claims

1. A method for making decorative laminate (10), comprising:
preparing a decorative layer (12) composed of a resin impregnated decorative sheet;
preparing a core layer (14) including an upper core sheet and a lowermost core sheet, wherein the upper core sheet is prepared by impregnating a first paper with a phenolic resin and the lowermost core sheet is sodium alginate treated Kraft paper (200) manufactured by
(i) forming an aqueous slurry (202) containing cellulosic pulp and other papermaking ingredients,
(ii) delivering the aqueous slurry to a pulp thickener (104) where excess water is expressed,
(iii) depositing the slurry on a conventional former in the mould section (108) of a paper making machine (100) to yield a formed slurry (204),
(iv) pressing the formed slurry (204) in a baby press (110) followed by further pressing in a press section (112),
(v) heating the formed and pressed slurry (206) in order to dry the material and produce a self-sustaining web of paper (208),
(vi) preparing a sodium alginate mixture,
(vii) applying the sodium alginate mixture to the web of paper to form a treated web of paper,
(viii) drying the sodium alginate mixture,
(ix) subjecting the treated web of paper (210) to a calendar section or machine (122), a pope reel section (124) and a sheet cutter (126) to form the sodium alginate treated Kraft paper (200);
stacking the decorative layer and the core layer, said core layer including the upper core sheet and the lowermost core sheet; and
consolidating the decorative layer (12), the upper core sheet and the lowermost core sheet under heat and pressure to form the decorative laminate (10) such that the phenolic resin from the upper core sheet fully penetrates the lowermost core sheet.

2. The method according to claim 1, wherein the upper core sheet is Kraft paper impregnated with phenol formaldehyde resin.

3. The method according to claim 1, wherein the sodium alginate mixture is composed of water, sodium alginate, a release agent, and a defoamer.

4. The method according to claim 1, wherein the sodium alginate mixture is only applied to one side of the web paper.

## Patentansprüche

1. Verfahren zur Fertigung eines dekorativen Laminats (10), aufweisend:
Herstellen einer dekorativen Schicht (12), die aus einem harzimprägnierten dekorativen Blatt besteht;
Herstellen einer Kernschicht (14), die ein oberes Kernblatt und ein unterstes Kernblatt enthält, wobei das obere Kernblatt hergestellt wird, indem ein erstes Papier mit einem Phenolharz imprägniert wird und das unterste Kernblatt ein mit Natriumalginat behandeltes Kraftpapier (200) ist, das erzeugt wird durch:
(i) Bilden einer wässrigen Aufschlämmung (202) enthaltend Zellulosepulpe und andere Papierherstellungsbestandteile,
(ii) Einbringen der wässrigen Aufschlämmung in einen Pulpeneindicker (104), wo überschüssiges Wasser ausgedrückt wird,
(iii) Ablagern der Aufschlämmung auf einem herkömmlichen Former in der Formsektion (108) einer Papierherstellungsmaschine (100), um eine geformte Aufschlämmung (204) zu erhalten,
(iv) Pressen der geformten Aufschlämmung (204) in einer Baby-Presse (110), gefolgt von einem weiteren Pressen in einer Pressensektion (112),
(v) Erhitzen der geformten und gepressten Aufschlämmung (206), um das Material zu trocknen und eine selbsttragende Papierbahn (208) zu erzeugen,
(vi) Herstellen eines Natriumalginat-Gemisches,
(vii) Auftragen des Natriumalginat-Gemisches auf die Papierbahn, um eine behandelte Papierbahn zu bilden,
(viii) Trocknen des Natriumalginat-Gemisches,
(ix) Zuführen der behandelten Papierbahn (210) zu einer Kalandersektion oder -maschine (122), einer Tragtrommelsektion (124) und einem Blattschneider (126), um das mit Natriumalginat behandelte Kraftpapier (200) zu bilden;
Stapeln der dekorativen Schicht und der Kernschicht, wobei die Kernschicht das obere Kernblatt und das unterste Kernblatt enthält; und
Verfestigen der dekorativen Schicht (12), des oberen Kernblatts und des untersten Kernblatts unter Hitze und Druck, um das dekorative Laminat (10) zu bilden, derart, dass das Phenolharz aus dem oberen Kernblatt voll in das unterste Kernblatt eindringt.

2. Verfahren nach Anspruch 1, wobei das obere Kernblatt mit Phenolformaldehydharz imprägniertes Kraftpapier ist.

3. Verfahren nach Anspruch 1, wobei das Natriumalginat-Gemisch aus Wasser, Natriumalginat, einem Trennmittel und einem Entschäumer besteht.

4. Verfahren nach Anspruch 1, wobei das Natriumalginat-Gemisch nur auf eine Seite der Papierbahn aufgebracht wird.

## Revendications

1. Procédé de fabrication d'un stratifié décoratif (10), comprenant :
la préparation d'une couche décorative (12) composée d'une feuille décorative imprégnée de résine ;
la préparation d'une couche centrale (14) comprenant une feuille centrale supérieure et une feuille centrale la plus inférieure, dans lequel la feuille centrale supérieure est préparée par l'imprégnation d'un premier papier avec une résine phénolique et la feuille centrale la plus inférieure est un papier Kraft (200) traité à l'alginate de sodium fabriqué en
(i) formant une suspension aqueuse (202) contenant de la pâte cellulosique et d'autres ingrédients de fabrication du papier,
(ii) livrant la suspension aqueuse vers un épaississeur de pâte (104) où l'excès d'eau est éliminé,
(iii) déposant la suspension sur une formeuse conventionnelle dans la section de moule (108) d'une machine à papier (100) pour obtenir une suspension formée (204),
(iv) comprimant la suspension formée (204) dans une presse à bébé (110) suivie d'un pressage supplémentaire dans une section de pressage (112),
(v) chauffant la suspension formée et pressée (206) afin de sécher le matériau et de produire une bande de papier autosuffisante (208),
(vi) préparant un mélange d'alginate de sodium,
(vii) appliquant le mélange d'alginate de sodium à la bande de papier pour former une bande de papier traitée,
(viii) asséchant le mélange d'alginate de sodium,
(ix) soumettant la bande de papier traitée (210) à une section ou machine de calandrage (122), à une section de bobinage (124) et à un coupe-feuilles (126) pour former le papier Kraft traité à l'alginate de sodium (200) ;
l'empilage de la couche décorative et de la couche centrale, ladite couche centrale comprenant la feuille centrale supérieure et la feuille centrale la plus inférieure ; et
la consolidation de la couche décorative (12), de la feuille centrale supérieure et de la feuille centrale la plus inférieure sous l'effet de la chaleur et de la pression pour former le stratifié décoratif (10) de telle sorte que la résine phénolique de la feuille centrale supérieure pénètre entièrement dans la feuille centrale la plus inférieure.

2. Procédé selon la revendication 1, dans lequel la feuille centrale supérieure est du papier Kraft imprégné de résine de phénol-formaldéhyde.

3. Procédé selon la revendication 1, dans lequel le mélange d'alginate de sodium est composé d'eau, d'alginate de sodium, d'un agent de démoulage et d'un antimousse.

4. Procédé selon la revendication 1, dans lequel le mélange d'alginate de sodium n'est appliqué que sur une face de la bande de papier.
